# EUROPEAN PATENT APPLICATION

(11) **EP 3 995 520 A1**
(43) Date of publication of application: **11.05.2022**
(21) Application number: 20834821.9
(22) Date of filing: 14.05.2020
(51) Int. Cl.: C08G 18/00, C08J 3/20

(54) **NEW MATERIAL WITH IMPROVED THERMOINSULATING CAPACITY, FOR TRANSPORT AND CONSTRUCTION, PRODUCED FROM A CHEMICAL POLYMERISATION REACTION**

(30) Priority: 01.07.2019 ES 201930608
(71) Applicant: Liderkit SL, 23210 Guarroman (Jaén) (ES)
(72) Inventor: DÍAZ CABEZAS, Francisco De Borja, 23700 LINARES (ES); PERAGON ORTEGA, Miguel, 23009 JAEN (ES)
(74) Representative: Aguilar Catalán, Blanca
(86) International application number: PCT/ES2020/070312
(87) International publication number: WO 2021/001582

(57) **Abstract**

This invention falls within the fields of advanced composite materials in the development of transport bodies and for the development of new construction materials. The new material with improved thermal insulation capacity for transport and construction and the production process claimed come from the polymerisation chemical reaction that comprises at least two polymerisation reagents, and an additive that contains micronised diatomaceous earth, which may be added to one or both chemical reaction agents, and subsequently gives the resulting material improved physical properties (thermal conductivity, density, etc.). This new material may be applied in moulds using high- or low-pressure injection techniques, casting, etc.

## Description

### TECHNOLOGY AREA

This invention falls within the fields of advanced composite materials in the development of transport bodies and for the development of new construction materials. This invention particularly refers to the resulting composite material that has additives in its formulation, such as diatomaceous earth, and to the procedure for preparing this new material. This composite material obtained has direct application to construction, land, air or maritime transport, as well as the environment in general, given that this type of material has improved thermal insulation properties and uses waste materials from the agri-food industry.

### BACKGROUND OF THE INVENTION

### Diatomaceous earth. Current uses.

Diatomite or diatomaceous earth (also known as DE, TSS, diahydro, kieselguhr or kieselgur) is a siliceous sedimentary rock formed of diatomaceous microfossils, which were unicellular marine algae that secreted a siliceous skeleton called frustule. This material acts as a filter, and its grain size is ideal for filtering water and producing beer. This material was initially used to stabilise nitroglycerin, and to form dynamite with it. Other applications of this material include its use as an abrasive agent for polishing metals, and its use as an adjuvant in cosmetics included in toothpastes and in skin exfoliating creams. It is also used as a natural non-poisonous pesticide, particularly in organic agriculture: the ingestion of silica particles causes damage to the digestive tube, leading to death by dehydration. Given that diatomite is formed from the remains of floating diatoms, it is found near current or former surface waters. It is generally divided into two categories based on the source: freshwater and salt water. Freshwater diatomaceous earth is collected from dry lake bed mines and is characterised by its low crystalline silica content. Salt water diatomaceous earth has a high crystalline silica content, making it a useful material for filters due to the sieving characteristics of its crystals.

### Polyurethane. Current benefits in the isothermal vehicle transport sector.

Polyurethane (PU, also known as PUR) is a polymer obtained from the condensation of hydroxy bases, combined with diisocyanates (usually TDI or MDI). Polyurethanes are classified in two groups, defined by their chemical structure and differentiated by their behaviour to temperature. The two types are as follows: Thermostable polyurethanes or thermoplastic polyurethanes (depending on whether they degrade before flowing or whether they flow before degrading, respectively). The most common thermostable polyurethanes are foams, commonly used as thermal insulation and as resilient foams. The most common thermoplastic polyurethanes are those used in elastomers, high performance sealant adhesives, the soles of shoes, paints, textile fibres, sealants, packaging, joints, condoms, car parts, in the construction and furniture industries, and in many more applications.

Rigid polyurethane is the most efficient and durable thermal insulating material used in the transport sector. Its low thermal conductivity conferred by the closed cell structure and its inexpensive production have put it at the forefront of products that help save energy through thermal insulation. The main three applications are: sprayed polyurethane, shaped polyurethane sheets and polyurethane sandwich panels. However, for the transport sector, there are 3 factors that mean that polyurethane has certain technical limitations:
- The thickness of the polyurethane sheet.
- The heat loss through this material.
- The density of the polyurethane.
- Solutions for the joints between sheets.

This will all affect the weight and correct thermal insulation of the bodies of isothermal vehicles, and the fact that they can lose effectiveness when insulating from the outside, so they may be lighter. Therefore, the use of polyurethane in the transport sector is one of the industry's tools for improving the bodies of isothermal vehicles.

### Polyurethane. Recent patents on modification of physical properties.

In the review of the state of the art of previous patents on methods for producing polyurethane, it is initially observed that during the 1980s and 1990s there were patents giving polyurethane different properties through physical modifications in its development, such as ES2295717T3 *"Thermal insulating and soundproofing material*" which presented a sheet of hard polyurethane foam with a closed cell percentage greater than 90% as a thermal insulating and soundproofing material, the surface of which included 1 to 18 holes per cm², but said patent did not mention the possibility of combining the polyurethane with another component or components for said mixture to improve its insulation capacity. Patent ES2599602T3 *"Method of producing fire-retardant foam insulating sheets"* concerns how to give sheets a fire retardant capacity using a metal element in those sheets. It was not until the 21st century that patents started to appear that chemically modified polyurethane formulations to give it physicochemical properties different from those it would have alone, particularly to improve its fire-retardant properties for application in construction. Several examples of this are patent EP1621564A1 *"Polyisocyanate and aqueous alkali silicate-based coating formulation for use in sandwich panels"* by means of a chemical reaction between an organic polyisocyanate, with an aqueous solution of alkali metal silicate and optionally a polyether polyol, suitable for use in sandwich panels in construction; patent WO2009143001A2 *"Coating formulations that comprise polyurea and graphite"* which comprises the composition of a polyurea and/or polyurethane-based coating as well as adding graphite to the isocyanate and/or amine components which are the precursors of polyurethane, patent US20140087158A1 *"High performance and energy efficient insulated precast concrete panels"* where the invention comprises the design and production of a multilayer panel with an insulating foam panel in an initial surface and a second surface of cement, modified concrete with polymer, gypsum or mortar. Or, lastly, patent WO2013151410A1 *"Composition of magnetic polyurethane for nerve stimulation"* which refers to a composition of polyurethane with magnetic properties, providing a constant magnetic field similar to that produced by the human body and enabling it to stimulate the nervous system and promote blood flow and energy balance to benefit health.

### REFERENCES USED

The following references were used to prepare this patent:
EP1621564A1 "Polyisocyanate and aqueous alkali silicate based coating formulation for use in sandwich panels" by Joern Kuester with priority date 26.07.2004
WO2009143001A2 "Coating compositions comprising polyurea and graphite" by John M. Furar, Michael A. Zalich, Howard L. Senkfor, with priority date 19.05.2008
US20140087158A1 *"High performance and energy efficient insulated precast concrete panels"*
WO2013151410A1 *"Composition of magnetic polyurethane for nerve stimulation"*

### EXPLANATION OF THE INVENTION

This new material has a development process that comprises at least the following stages and steps:
a) Preparation of the moulds. These moulds will be cleaned of residue or dust using water or organic solvents if necessary, and will be dried properly to avoid the appearance of undesirable shapes in the resulting mould. Where necessary, a mould release agent will be added to make sure the mixture does not stick to the mould.
b) Weighing of the polymerisation reagents separately in a dry environment at room temperature. Both the reagent comprising an isocyanate functional group (R-N=C=O), and the reagent comprising an amine (R-NH-R), thiol (R-SH) or hydroxyl (R-OH) functional group or a combination of them, so that they can react stoichiometrically (1:1) with the reagent containing the isocyanate group. If necessary, terminating agents will be added to the polyols to ensure the full reaction of the reagents.
c) Weighing of the diatomaceous earth in a dry environment at room temperature. The diatomaceous earth can be added to both reagent 1 and reagent 2 for its complete homogenisation. It is very important for the diatomaceous earth to be dehydrated before weighing, and for weighing to take place in a dry environment, as the presence of humidity in any of the reagents may mean the subsequent polymerisation reaction does not occur correctly.
d) Intimate combination of the reagents at controlled temperature (10-35°C) and agitation (1,000-10,000 rpm). The aim is to have an intimate combination of the reagents for full homogenisation of the reagents and to ensure there are no air bubbles in the mixture. The propeller of the agitator should preferably be of the anchor type in the bottom of the container.
e) Application in moulds and subsequent curing of the composition. Moulding is carried out by means of high- or low-pressure casting, or by injecting the resulting mixture into the mould designed for this purpose, which should be prepared beforehand at the required temperature, subsequently leaving the mixture to cure in the mould at a controlled temperature and humidity.

Benefits of the new material in comparison with existing materials.

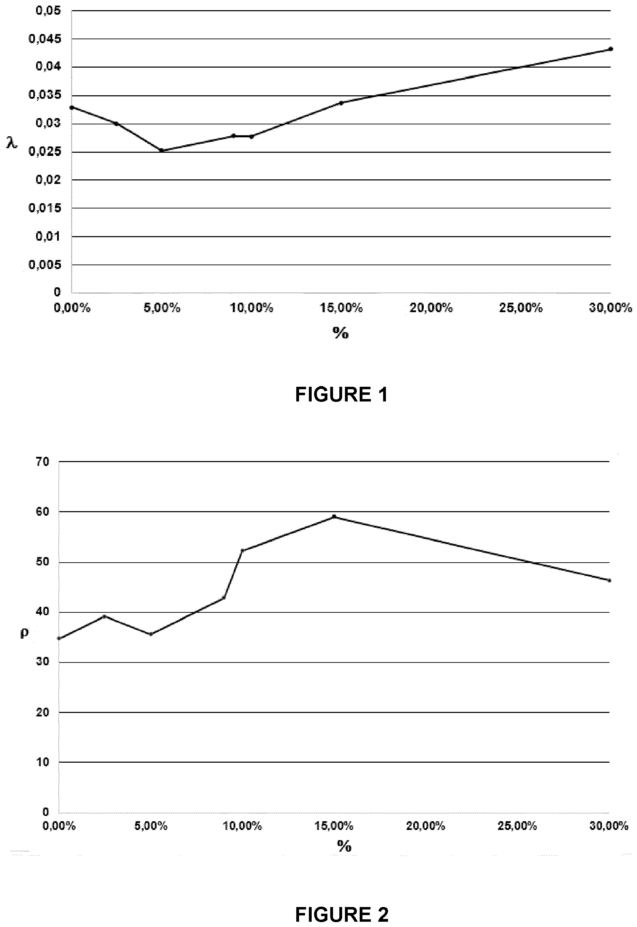

As shown in **Figure 1** and **Figure 2****,** this material improves existing thermal insulation capacities while improving parameters such as thermal conductivity (decrease in this parameter) and density of the resulting material (keeps the density almost identical up to 10% of diatomaceous earth added to the mixture), which can result, for the production of thermal insulation panels, an increase in the thermal insulation capacity of these panels without markedly increasing their weight. In the production of isothermal bodies for transport vehicles, for example, this leads to the production of bodies of the same dimensions and a similar weight but retaining the heat much more efficiently.

### BRIEF DESCRIPTION OF THE DIAGRAMS

**FIGURE 1****.** Figure showing the evolution of the thermal conductivity of the new thermal insulation material as the percentage of diatomaceous earth added to the new material mixture increases. The thermal conductivity (**λ**) is expressed in International System units (**W/K·m²**), while the quantity of diatomaceous earth added to the material is expressed as a percentage in weight (%).
**FIGURE 2****.** Figure showing the evolution of the density of the new thermal insulation material as the percentage of diatomaceous earth added to the new material mixture increases. The density (p) is expressed in **10⁶ Kg/m³**, while the quantity of diatomaceous earth added to the material is expressed as a percentage in weight (%).

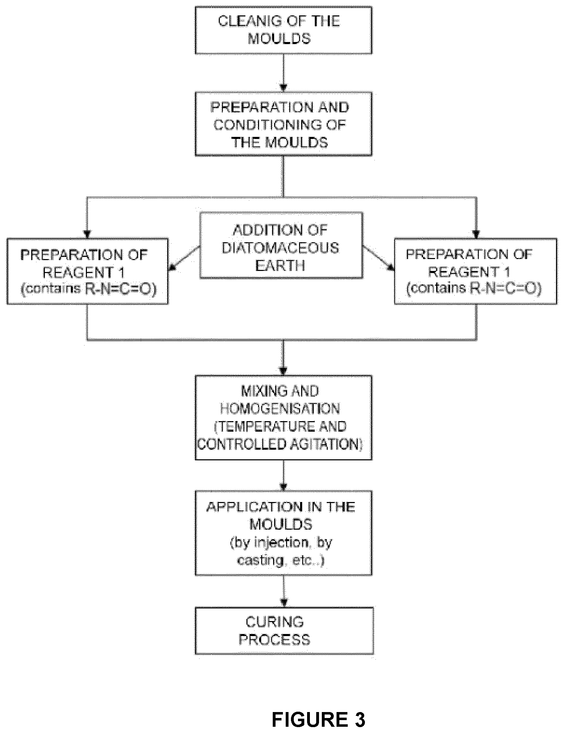

**FIGURE 3** A flowchart showing the minimum steps required to obtain the new material with improved thermal insulation capacity.

### PREFERRED EMBODIMENT OF THE INVENTION

This type of material is applied at industrial level in many different sectors:
Transport industry. One of the most significant challenges facing the transport industry in the 21st century is the development of much lighter materials able to retain certain functional characteristics (retention of heat, flexibility on impact, etc.) and which can be produced at affordable prices. By using this new material in bodies of isothermal vehicles, the weight of the designed body can be reduced, lowering the vehicle's carbon footprint while improving the heat capacities of the material used. These applications do not just apply to isothermal vehicles, they can also be applied to the automotive industry in general for certain parts used to maintain a space at a homogeneous temperature, such as in the passenger compartment of different types of vehicles (planes, cars, trains, etc.).

Construction industry. In the construction of sustainable buildings, architects are increasingly interested in reducing the building's environmental impact and in using lighter materials to make building easier. By using this new material, it is much easier to keep temperature conditions stable within the building, avoiding the use of excess insulation material, lowering the constructor's building costs, and insulating the building.

Having appropriately described the nature of the invention and given an example of preferred embodiment, it must be noted that the materials, shape, size and layout of the elements described may be modified, provided this does not result in a change to the essential characteristics of the invention as claimed below.

This invention makes use of specific vocabulary with which experts in the technique may be familiar. However, the scope of this vocabulary is defined in this document to determine the concept, spirit and scope of the invention.

The term "mould" (see **Figure 3****)** is used in this document to mean any device used to shape polyurethane before the curing process. The mould has a countermould with the holes required to inject the product in and allow air out.

The term "new material" is used in this document to refer to the polyurethane or polyurea resulting from the compositions claimed, which is formed of a reaction mixture comprising a reagent with at least one isocyanate functional group and one reagent with at least one anime, hydroxyl or thiol functional group.

The term "reagent that contains isocyanate groups" is used in this document to mean any thermostable chemical, monomer or prepolymer which may contain the isocyanate as a functional group, including unblocked compounds able to form a covalent bond with a reagent group, such as a hydroxyl, mercaptan or amine group, resulting in a new material with improved physical properties of hardness, traction and thermal insulation. Therefore, isocyanate may refer to "free isocyanate" as understood by experts in the technique. In nonlimiting alternative embodiments, the isocyanate in this invention may be monofunctional, containing an isocyanate functional group (NCO), or the isocyanate used in this invention may be polyfunctional, containing two or more isocyanate functional groups. The isocyanates suitable for use in this invention are numerous and may vary greatly. Nonlimiting examples of suitable isocyanates may include monomer and/or polymer isocyanates. The polyisocyanates can be selected from monomers, prepolymers, oligomers or mixtures thereof. In one embodiment, the polyisocyanate can be linear, branched, cyclic, aromatic C₂-C_{2O} or mixtures thereof.

The term "reagent that contains amine (R-NH-R), thiol (R-SH) or hydroxyl functional groups (RE-OH)" is used in this document to mean any chemical substance containing these chemical groups and which may undergo a chemical crosslinking reaction, resulting in a new material with improved physical properties of hardness, traction and thermal insulation.

The amines suitable for use in the amine reagent in this invention can be selected from a wide range of known amines, such as primary or secondary amines and mixtures thereof, including polyamines with at least two functional groups, such as diamines, polyamines with triple or greater functionality and mixtures thereof. The anime or animes used may be aromatic or aliphatic, such as cycloaliphatics, or a mixture thereof. Suitable monoamines include but are not limited to primary amines of the formula R₈-NH₂, where R₈ is a hydrocarbon radical that may represent a linear or branched chain alkyl group, an aryl alkyl group, a hydroxyalkyl group or an alkoxyalkyl group.

Thiols suitable for use in the reagent in this invention may be selected from a wide range of known thiols. It is used in this document as a compound with a thiol or mercaptan group, i.e. is an "SH" group", which may be a "polythiol" with more than one SH group, such as a dithiol or higher-functionality thiol. Said groups are typically terminal and/or hanging and, therefore, they have an active hydrogen which reacts with other functional groups.

The term "grain size" is used in this document to mean the graduation used for materials, indicating in units of length the maximum size an aggregate particle that the measured material may have.

The term "accelerator" is used in this document to mean any chemical substance that accelerates the speed of a chemical reaction and with a mass that decreases during the chemical reaction.

The term "curing process" (see **Figure 3****)** is used in this document to mean any subsequent polymerisation process that occurs and leads to a crosslinking polyurethane reaction.

The new material and/or the methods claimed in this document can be performed and implemented without experimentation in light of this description. It is clear that experts in the technique may vary the sequence of steps in the method described in the specific embodiments section and in **Figure 3** of this document, without deviating from the concept, spirit and scope of the invention. All these similar modifications made by experts in the technique are considered to be within the spirit, scope and concept of the invention, as defined by the enclosed claims.

## Claims

1. The new material with improved thermal insulation capacity for transport and construction from a polymerisation chemical reaction includes at least the following in its formation:
a) a first reagent (between 30-70% by weight) which contains among its functional groups an isocyanate group (R-N=C=O), where R can be any functional group.
b) a second reagent (between 30-70% by weight) which contains among its functional groups an amine group (R-NH-R), a thiol group (R-SH) or a hydroxyl group (R-OH), or combinations thereof, where R can be any functional group.
c) an additive containing micronised diatomaceous earth (with a mean grain size of between 1 and 80 microns) which provides the new material with a diatomaceous earth content of between 1% and 30%.

2. . The new material with improved thermal insulation capacity for transport and construction from polymerisation chemical reaction in claim 1 is **characterised by** the fact that the chemical reaction is stoichiometrically equivalent, between the reagent that contains the isocyanate groups and the equivalents of the reagent that contains the added amine, thiol or hydroxyl groups, and must have a ratio equal to 1.

3. The new material with improved thermal insulation capacity for transport and construction from polymerisation chemical reaction in claim 1 is **characterised by** the fact that the composition of the additive contains diatomaceous earth, and this diatomaceous earth comes from tripolite (variety found in Tripoli, Libya), Bann-clay (variety found in the Lower Bann Valley in Northern Ireland), and Mo-clay (variety found in north-west Denmark, specifically in the islands of Fur and Mors) varieties, or combinations thereof.

4. The new thermal insulating material for transport and construction from polymerisation chemical reaction in claim 1 is **characterised by** the fact that a first reagent can be a prepolymer with a function similar to that of an isocyanate.

5. The new material with improved thermal insulation capacity for transport and construction from polymerisation chemical reaction from claim 1 is **characterised by** the fact that a second reagent can be a mixture of one or more polyols, polythiols and polyamines.

6. The new material with improved thermal insulation capacity for transport and construction from polymerisation chemical reaction in claim 1 is **characterised by** the fact that a second reagent can include any catalyst that accelerates the polymerisation chemical reaction in the mixture.

7. The new material with improved thermal insulation capacity for transport and construction from polymerisation chemical reaction in claim 1 is **characterised by** the fact that the polymerisation chemical reaction has a stoichiometric ratio of 1:1 of isocyanate group equivalents (RN-C=O) of the first reagent, versus the sum of equivalents of the second reagent that contains at least hydroxyl groups (R-OH) and/or thiol groups (R-SH) and/or amine groups (R-NH-R) or combinations thereof.

8. The new material with improved thermal insulation capacity for transport and construction from polymerisation chemical reaction in claim 1 is **characterised by** the fact that an additional flame-retardant material can be added to the first reagent, to the second reagent, or to both.

9. The new material with improved thermal insulation capacity for transport and construction from polymerisation chemical reaction in claim 1 is **characterised by** the order of addition of the additive that contains the diatomaceous earth to the first reagent, or to the second reagent or to both, before the chemical reaction.

10. The new material with improved thermal insulation capacity for transport and construction from polymerisation chemical reaction in claim 1 is **characterised by** a development process comprising at least following stages or steps:
a) Weighing of the raw materials indicated in claim 1 separately in a dry environment at room temperature.
b) Intimate combination of the constituent elements indicated in claim 1, with the second reagent (which contains the hydroxyl, thiol or amine groups) added last.
c) The correct homogenisation of the elements combined using physical agitation at a constant temperature.
d) Application in moulds and subsequent curing of said composition. Therefore, moulding will involve high- or low-pressure casting or the injecting of the resulting mixture into the mould, which must be prepared beforehand.
